# EUROPÄISCHE PATENTSCHRIFT

(11) **EP 3 458 704 B1**
(45) Veröffentlichungstag und Bekanntmachung des Hinweises auf die Patenterteilung: **23.06.2021**
(21) Anmeldenummer: 17712468.2
(22) Anmeldetag: 21.03.2017
(51) Int. Cl.: F02M 55/00, F02M 63/00, F02M 37/00, F02M 59/46, F16K 17/04, F16K 17/30, F02D 41/38

(54) **VERFAHREN ZUM BETRIEB EINES ÜBERSTRÖMVENTILS**
METHOD FOR OPERATING AN OVERFLOW VALVE
PROCÉDÉ DE FONCTIONNEMENT D'UNE SOUPAPE DE DÉCHARGE

(30) Priorität: 17.05.2016 DE 102016208427
(43) Veröffentlichungstag der Anmeldung: 27.03.2019
(73) Patentinhaber: Robert Bosch GmbH, 70442 Stuttgart (DE)
(72) Erfinder: KOEHLER, Achim, 70437 Stuttgart-Zuffenhausen (DE)
(86) Internationale Anmeldenummer: PCT/EP2017/056622
(87) Internationale Veröffentlichungsnummer: WO 2017/198364

(56) Entgegenhaltungen:
- DE-A1- 1 600 725
- DE-A1- 19 818 385
- DE-A1-102010 003 517
- DE-A1-102013 208 707
- DE-A1-102015 104 642

## Beschreibung

Die Erfindung betrifft ein Verfahren zum Betrieb eines Überströmventils nach der Gattung der unabhängigen Ansprüche.

### Stand der Technik

Aus der Offenlegungsschrift DE 10 2013 208 707 A1 sind bereits ein Überströmventil für eine Kraftstoffhochdruckpumpe in einem Kraftstoffeinspritzsystem, insbesondere in einem Common-Rail-Einspritzsystem, und eine Hochdruckpumpe mit einem solchen Überströmventil bekannt. Das Überströmventil umfasst ein in einer Gehäusebohrung verschiebbar aufgenommenes Ventilelement zur Verbindung eines Ventileingangs mit wenigstens einem Ventilausgang sowie eine in einem Federraum aufgenommene Feder, deren Federkraft das Ventilelement in Richtung des Ventileingangs beaufschlagt. Dabei sind mehrere Ventilausgänge jeweils in Form einer radial in die Gehäusebohrung mündenden Bohrung vorgesehen, die zur Ausbildung eines mehrstufigen Überströmventils, umfassend wenigstens eine erste Stufe und eine zweite Stufe, unterschiedliche freie Strömungsquerschnitte besitzen und/oder in unterschiedlichen axialen Abständen zum Ventileingang angeordnet sind DE102010003517 A1 und DE102015104642 A1 offenbaren Verfahren zum Betrieb eines Überströmventils.

DE1600725 A1, DE10 2013208707 A1 und DE19818385 A1 offenbaren Überströmventile. Z

Dies hat zur Folge, dass auch der Durchfluss in den verschiedenen Stufen variiert. Der Durchfluss kann auf diese Weise an bestimmte Betriebsparameter der Hochdruckpumpe angepasst werden. Bei steigender Temperatur kann die über das Überströmventil abgeführte, vorzugsweise einem Rücklauf zugeführte Kraftstoffmenge erhöht werden, um beispielsweise eine verbesserte Wärmeabfuhr zu bewirken.

### Offenbarung der Erfindung

Der Hauptanspruch definiert das erfindungsgemäße Verfahren zum Betrieb eines Überströmventils. Auf diese Weise kann ein Durchfluss aus dem Innenraum des Ventilelementes zum mindestens einen Ventilausgang in der Gehäusewand außerhalb des ersten Bereichs der Position des Ventilementes in der Gehäusebohrung vermieden werden. Ein unnötiger Volumenstrom durch die Drosselöffnung wird somit verhindert. Somit kann in diesem Fall die Fördermenge einer vorgeschalteten Vorförderpumpe reduziert und deren Wirkungsgrad erhöht werden.

Durch die in den Unteransprüchen aufgeführten Maßnahmen sind vorteilhafte Weiterbildungen und Verbesserungen des im Hauptanspruch angegebenen Überströmventils möglich.

Vorteilhaft ist es dabei, wenn die Querschnittsfläche der Drosselöffnung, vorzugsweise vom Innenraum des Ventilelementes, bis zur Gehäusebohrung, vorzugsweise stufenförmig, zunimmt. Auf diese Weise lässt sich die Ausdehnung des ersten Bereichs für die Position des Ventilelementes in der Gehäusebohrung auf einen gewünschten oder vorgegebenen Wertebereich einstellen bzw. ein gewünschter Bereich für den Öffnungsdruck des Überströmventils einstellen, in dem der erste Bereich für die Position des Ventilelementes in der Gehäusebohrung vorliegt.

Vorteilhaft ist weiterhin, wenn die Zunahme der Querschnittsfläche sowohl in Richtung zum Ventileingang als auch in Richtung zum Federraum ausgebildet ist. Auf diese Weise lässt sich die Drosselöffnung mit wenig Aufwand fertigen und der erste Bereich für die Position des Ventilelementes in der Gehäusebohrung einfach einstellen.

Die Fertigung der Drosselöffnung vereinfacht sich außerdem, wenn die Drosselöffnung in Form eines, insbesondere gestuften, Ringeinstichs am Ventilelement ausgebildet ist.

Ein weiterer Vorteil ergibt sich, wenn der Abstand der Drosselöffnung an der dem Innenraum abgewandten Seite des Ventilelementes in axialer Richtung zum ventileingangsseitigen Ende des Ventilelementes mindestens so groß gewählt ist, dass er dem Durchmesser des mindestens einen Ventilausgangs der Gehäusewand in axialer Richtung entspricht. Auf diese Weise wird sichergestellt, dass ein Durchfluss durch die Drosselöffnung gesperrt wird sobald das Ventilelement den mindestens einen Ventilausgang an seinem dem Federraum abgewandten Ende freigibt. Der Betrag der Fördermenge durch eine Vorförderpumpe kann so reduziert werden. Außerdem wird auf diese Weise der Wirkungsgrad der Vorförderpumpe erhöht.

Vorteilhaft ist weiterhin, wenn mehrere Ventilausgänge vorgesehen sind, die insbesondere in einer Radialebene und/oder in gleichem Winkelabstand zueinander angeordnet sind. Auf diese Weise wird eine gleichmäßige Durchströmung des Überströmventils erreicht. Der freie Strömungsquerschnitt der mehreren Ventilausgänge ist vorzugsweise jeweils gleich gewählt. Bei dem erfindungsgemäßen Überströmventil wird der Durchfluss bevorzugt durch die Anzahl der Ventilausgänge und/oder durch den freien Strömungsquerschnitt des mindestens einen Ventilausgangs festgelegt. Sofern mehrere Ventilausgänge vorgesehen sind, beträgt die Anzahl der Ventilausgänge vorzugsweise 2, 3 oder 4. Darüber hinaus können aber auch mehr als 4 Ventilausgänge vorgesehen sein.

Ein weiterer Vorteil ergibt sich, wenn der durch die Drosselöffnung geschaffene freie Strömungsquerschnitt kleiner als der freie Strömungsquerschnitt des mindestens einen Ventilausgangs ist. Auf diese Weise lassen sich zwei Stufen des Durchflusses durch das Überströmventil einstellen, die sich in ihrer Durchflussmenge unterscheiden. In einer ersten Stufe mit dem geringeren freien Strömungsquerschnitt durch die Drosselöffnung lässt sich ein Druckregelbereich realisieren und in einer zweiten Stufe mit dem größeren freien Strömungsquerschnitt des mindestens einen Ventilausgangs ein Mengenregelbereich. Die angestrebte Erhöhung des Durchflusses in der zweiten Stufe lässt sich an einer Kennlinie des Überströmventils ablesen. Ein erfindungsgemäßes Überströmventil weist vorzugsweise eine Kennlinie auf, die zum Ende hin steil ansteigt. Der Durchfluss in der ersten Stufe ist vorzugsweise derart gewählt, dass eine Mengenbegrenzung erzielt wird.

Das Überströmventil öffnet demnach in mehreren Stufen, wobei in den mehreren Stufen die Anzahl und/oder der freie Strömungsquerschnitt des mit dem Ventileingang verbundenen mindestens einen Ventilausgangs variiert. Dies hat zur Folge, dass auch der Durchfluss in den verschiedenen Stufen variiert. Der Durchfluss kann auf diese Weise an bestimmte Betriebsparameter der Hochdruckpumpe angepasst werden. Bei steigender Temperatur kann die über das Überströmventil abgeführte, vorzugsweise einem Rücklauf zugeführte Kraftstoffmenge erhöht werden, um beispielsweise eine verbesserte Wärmeabfuhr zu bewirken.

Für den Druckregelbereich hat sich als vorteilhaft erwiesen, wenn der freie Strömungsquerschnitt der Drosselöffnung 0,15mm² bis 0,5mm² beträgt. Auf diese Weise wird außerdem eine Mengenbegrenzung in der ersten Stufe erzielt.

Um die Mengenbegrenzung in der zweiten Stufe weitgehend aufzuheben, wird ferner vorgeschlagen, dass der über den mindestens einen Ventilausgang geschaffene freie Strömungsquerschnitt 3 mm² bis 50 mm² beträgt. Auf diese Weise kann in der zweiten Stufe eine deutliche Erhöhung des Durchflusses bewirkt werden. Dies ermöglicht im Bedarfsfall eine schnelle Durchspülung und/oder Entlüftung der Hochdruckpumpe.

Für den Druckregelbereich hat sich als vorteilhaft erwiesen, wenn der erste Bereich der Position des Ventilelements in der Gehäusebohrung bei einem Öffnungsdruck des Überströmventils in einem vorgegebenen Druckbereich, vorzugsweise zwischen 1,0 bar und 4,0 bar, vorliegt.

Vorteilhaft ist weiterhin, wenn das Ventilelement in einem zweiten Bereich seiner Position in der Gehäusebohrung den mindestens einen Ventilausgang an seinem dem Federraum abgewandten Ende zumindest teilweise freigibt. Auf diese Weise lässt sich die zweite Stufe des Durchflusses einfach und wenig aufwändig realisieren.

Für den Mengenregelbereich hat sich als vorteilhaft erwiesen, wenn der zweite Bereich der Position des Ventilelements in der Gehäusebohrung bei einem Öffnungsdruck des Überströmventils in einem vorgegebenen Druckbereich, insbesondere größer oder gleich 4,0 bar, vorzugsweise größer oder gleich 4,5 bar, vorliegt.

Vorteilhafterweise ist im Betrieb der Hochruckpumpe der Federraum des Überströmventils überwiegend frei von flüssigem Kraftstoff. Dadurch ist sichergestellt, dass die Beweglichkeit des Ventilelements nicht eingeschränkt wird. Das Überströmventil weist somit eine hohe Dynamik und Funktionssicherheit auf.

Als Vorteil ergibt sich dabei, wenn das Ventilelement den Federraum gegenüber dem Ventileingang abdichtet. Dass eine geringe Leckagemenge am Ventilelement vorbei in den Federraum gelangt, wird in Kauf genommen. Zum Abführen der Leckagemenge ist vorzugsweise der Federraum über eine Bohrung an eine Rücklaufleitung angeschlossen.

Ferner wird vorgeschlagen, dass das Ventilelement kolbenförmig ausgebildet ist. Ein solches Ventilelement ist einfach und kostengünstig herstellbar. Alternativ oder ergänzend wird vorgeschlagen, dass das Ventilelement an seinem dem Ventileingang zugewandten Ende eine ringförmige Steuerkante besitzt. Die Lage der Steuerkante in Bezug auf den mindestens einen Ventilausgang bestimmt den freien Strömungsquerschnitt des mindestens einen Ventilausgangs und damit den Ventildurchfluss in der zweiten Stufe.

Die darüber hinaus vorgeschlagene Hochdruckpumpe umfasst ein erfindungsgemäßes Überströmventil. Das Überströmventil ist hierbei in einem Niederdruckbereich der Hochdruckpumpe angeordnet. Vorzugsweise verbindet das Überströmventil einen Triebwerksraum der Hochdruckpumpe mit einer Rücklaufleitung.

Das vorgeschlagene Verfahren zum Betrieb eines Überströmventils sieht einen Betrieb in mindestens zwei Stufen mit unterschiedlichem Durchfluss Q vor, wobei das Überströmventil in einer Hochdruckpumpe eines Kraftstoffeinspritzsystems einer Brennkraftmaschine angeordnet ist und ein Zulaufdruck des Überströmventils durch eine Vorförderpumpe eingestellt wird und wobei abhängig vom Zulaufdruck das Überströmventil in einer ersten Stufe mit geringerem Durchfluss Q oder in einer zweiten Stufe mit höherem Durchfluss Q betrieben wird.

Erfindungsgemäß wird der Zulaufdruck abhängig von einer Motordrehzahl n der Brennkraftmaschine, einem Kraftstoffdruck p in einem von der Hochdruckpumpe mit Kraftstoff versorgten Hochdruckspeicher und/oder einer Kraftstofftemperatur T, insbesondere im Hochdruckspeicher, in einem Triebwerksraum der Hochdruckpumpe oder in einer Rücklaufleitung der Hochdruckpumpe, eingestellt.

Auf diese Weise kann die erste Stufe oder die zweite Stufe gezielt je nach Belastung der Brennkraftmaschine eingestellt werden. In den häufigsten Fällen der Belastung der Brennkraftmaschine reicht ein Betrieb des Überströmventils in der ersten Stufe aus, so dass die Vorförderpumpe auf einen entsprechend geringeren Zulaufdruck und damit eine geringere Fördermenge zur Einstellung der ersten Stufe des Überströmventils eingestellt werden kann. Somit wird Energie beim Betrieb der Vorförderpumpe eingespart, deren Wirkungsgrad erhöht und die CO2-Emissionen reduziert.

Durch die abhängigen Verfahrensansprüche werden vorteilhafte Weiterbildungen und Verbesserungen bewirkt.

Vorteilhaft ist es, wenn der Zulaufdruck zum Betrieb des Überströmventils in der ersten Stufe für eine Motordrehzahl n unterhalb eines vorgegebenen Motordrehzahlgrenzwertes, eine Kraftstofftemperatur T unterhalb eines vorgegebenen Temperaturgrenzwertes und/oder eines Kraftstoffdruckes p unterhalb eines vorgegebenen Druckgrenzwertes eingestellt wird und wenn andernfalls ein Zulaufdruck zum Betrieb des Überströmventils in der zweiten Stufe eingestellt wird. Auf diese Weise wird sichergestellt, dass das Überströmventil in einem möglichst großen Betriebsbereich in der ersten Stufe und damit kraftstoffsparend betrieben werden kann und die zweite Stufe des Überströmventils nur dann angesteuert wird, wenn es die Kühlung des Triebwerksraums der Hochdruckpumpe wirklich erfordert.

Als vorteilhafter Wertebereich für den Motordrehzahlgrenzwert im Hinblick auf die Abgrenzung zwischen notwendiger Kühlung des Triebwerksraums einerseits und möglichst großer Kraftstoffeinsparung andererseits hat sich ein Bereich von 1500rpm bis 3500rpm, vorzugsweise ein Bereich von 2500rpm bis 3000rpm, herausgestellt.

Als vorteilhafter Wertebereich für den Kraftstofftemperaturgrenzwert im Hinblick auf die Abgrenzung zwischen notwendiger Kühlung des Triebwerksraums einerseits und möglichst großer Kraftstoffeinsparung andererseits hat sich ein Bereich von 60°C bis 75°C, vorzugsweise ein Bereich von 65°C bis 70°C, herausgestellt.

Als vorteilhafter Wertebereich für den Kraftstoffdruckgrenzwert im Hinblick auf die Abgrenzung zwischen notwendiger Kühlung des Triebwerksraums einerseits und möglichst großer Kraftstoffeinsparung andererseits hat sich ein Bereich von 1400bar bis 1800bar, vorzugsweise ein Bereich von 1500bar bis 1700bar, herausgestellt.

Bevorzugte Ausführungsformen der Erfindung werden nachfolgend anhand der beigefügten Zeichnungen näher erläutert. Diese zeigen:
- Fig. 1: einen Ausschnitt aus einem schematisch dargestellten Kraftstoffeinspritzsystem mit einem Schnitt durch eine Hochdruckpumpe mit einem erfindungsgemäßen Überströmventil,
- Fig. 2: einen Schnitt durch das Überströmventil der Hochdruckpumpe der Fig. 1 in einem ersten Betriebszustand,
- Fig. 3: einen Schnitt durch das Überströmventil der Hochdruckpumpe der Fig. 1 in einem zweiten Betriebszustand,
- Fig. 4: einen Schnitt durch das Überströmventil der Hochdruckpumpe der Fig. 1 in einem dritten Betriebszustand,
- Fig. 5: ein Diagramm zur Darstellung der Kennlinie eines erfindungsgemäßen Überströmventils.
- Fig. 6: einen Ablaufplan für ein erstes Beispiel eines Betriebs eines zweistufigen Überströmventils und
- Fig. 7: einen Ablaufplan für ein zweites Beispiel eines Betriebs eines zweistufigen Überströmventils.

### Beschreibung der Ausführungsbeispiele

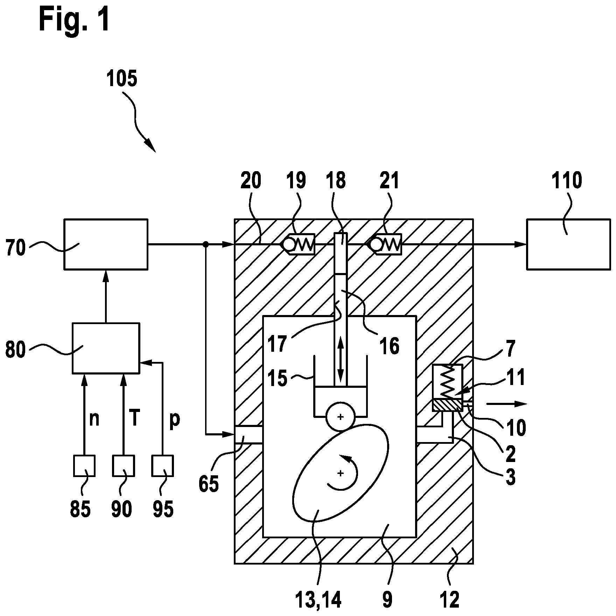

Eine in der Figur 1 dargestellte Hochdruckpumpe 105 umfasst ein Gehäuse 12 mit einem Triebwerksraum 9, in dem eine Antriebswelle 13 mit einem Nocken 14 aufgenommen ist. An dem Nocken 14 ist mittelbar über einen Rollenstößel 15 ein Pumpenkolben 16 abgestützt. Das dem Nocken 14 abgewandte Ende des Pumpenkolbens 16 ist in einer Zylinderbohrung 17 des Gehäuses 12 aufgenommen, so dass der Pumpenkolben 16 einen Pumpenarbeitsraum 18 begrenzt. Der Pumpenarbeitsraum 18 ist über ein Einlassventil 19 mit einem Kraftstoffzulauf 20 und über ein Auslassventil 21 mit einem Hochdruckspeicher 110 verbindbar. Im Saugbetrieb der Hochdruckpumpe 105 wird der Pumpenarbeitsraum 18 über das Einlassventil 19 mit Kraftstoff befüllt. Im Förderbetrieb der Hochdruckpumpe 105 wird der Kraftstoff im Pumpenarbeitsraum 18 verdichtet und anschließend dem Hochdruckspeicher 110 zugeführt.

In das Gehäuse 12 der Hochdruckpumpe 105 ist ein Überströmventil 11 integriert, über welches der Triebwerksraum 9 mit einer Rücklaufleitung 10 verbindbar ist. Auf diese Weise kann das Überströmventil 11 zur Druck- und Mengenregelung im Triebwerksraum 9 eingesetzt werden. Ferner ermöglicht das Überströmventil 11 den Ausgleich von Druckpulsationen. Denn es umfasst ein in einer Gehäusebohrung 1 verschiebbar aufgenommenes Ventilelement 2, das in Schließrichtung von der Federkraft einer Feder 7 beaufschlagt ist und somit in der Lage ist, zumindest einen Teil der Volumenunförmigkeit des Triebwerksraums 9 aufzunehmen.

Triebwerksraum 9 und Überströmventil 11 sind in einem Niederdruckbereich der Hochdruckpumpe 105 angeordnet.

Die Hochdruckpumpe 105 kann beispielsweise in einem Kraftstoffeinspritzsystem, insbesondere in einem Common-Rail-Einspritzsystem, Verwendung finden. In diesem Fall wird der über das Einlassventil 19 angesaugte Kraftstoff von einer Vorföderpumpe 70 zur Verfügung gestellt. Ein anderer Teil des von der Vorförderpumpe 70 zur Verfügung gestellten Kraftstoffs wird zudem über einen Einlass 65 des Gehäuses 12 der Hochdruckpumpe 105 dem Triebwerksraum 9 zugeführt. Dort soll er die im Triebwerksraum 9 angeordneten Komponenten der Hochdruckpumpe 105 kühlen und schmieren. Der dem Triebwerksraum 9 zugeführte Kraftstoff übt über einen Ventileingang 3 einen Öffnungsdruck auf das Ventilelement 2 aus.

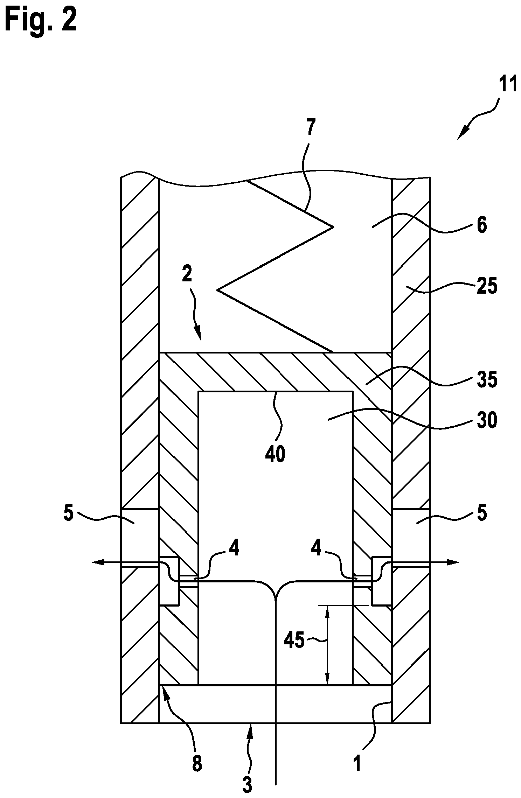

Figur 2 zeigt das Überströmventil 11 in einem ersten Betriebszustand. Dabei kennzeichnen gleiche Bezugszeichen gleiche Elemente wie in Figur 1. Das Ventilelement 2 ist dabei als Ventilkolben ausgebildet, der einen Innenraum 30 umfasst. Der Innenraum 30 ist dabei lediglich zum Ventileingang 3 des Überströmventils 11 hin geöffnet. Der Ventilkolben 2 ist somit als Hohlzylinder ausgebildet, der den Ventileingang 3 des Überströmventils 11 gegen einen die Feder 7 aufnehmenden Federraum 6 abdichtet. Dabei ist eine rohrförmige Umwandung des Ventilkolbens 2 in Figur 2 mit dem Bezugszeichen 35 gekennzeichnet. Ein den Federraum 6 begrenzender Boden des Ventilkolbens 2 trägt das Bezugszeichen 40. Die Umwandung 35 weist eine Drosselöffnung 4 in ihrem dem Ventileingang 3 zugewandten Bereich auf. Die Drosselöffnung 4 kann dabei beispielsweise als Ringeinstich am Ventilkolben 2 ausgebildet sein und damit einen Teil der Umwandung 35 ringförmig umlaufen. Der Ringeinstich ist vorteilhaft äquidistant zum Boden 40 in einer Radialebene des Ventilkolbens 2 angeordnet.

Zusätzlich oder alternativ kann die Drosselöffnung 4 auch mehrere voneinander getrennte Einstiche in Ringform aufweisen, die ebenfalls vorteilhaft äquidistant von der Ebene des Bodens 40 angeordnet sind. Die Drosselöffnung 4 kann zusätzlich oder alternativ auch eine oder mehrere Bohrungen, vorteilhaft äquidistant zur Ebene des Bodens 40 in einer Radialebene des Ventilkolbens 2, umfassen.

In einer bevorzugten Ausführungsform und wie in Figur 2 dargestellt nimmt die Querschnittsfläche der Drosselöffnung 4 vom Innenraum 30 des Ventilkolbens 2 bis zur Gehäusebohrung 1, vorzugsweise stufenförmig, zu. Die Zunahme der Querschnittsfläche ist entsprechend dem Ausführungsbeispiel nach Figur 2 sowohl in Richtung zum Ventileingang 3 als auch in Richtung zum Federraum 6 ausgebildet. Sie könnte alternativ auch nur in einer der beiden Richtungen ausgebildet sein. Es kann auch vorgesehen sein, dass die Drosselöffnung 4 innerhalb der Umwandung 35 derart angeordnet ist, dass ihre Qurschnittsfläche sowohl in Richtung der Gehäusebohrung 1 als auch in Richtung des Innenraums 30 des Ventilkolbens 2 zunimmt. Natürlich kann alternativ auch eine konstante Querschnittsfläche der Drosselöffnung 4 vom Innenraum 30 bis zur Gehäusebohrung 1 in der Umwandung 35 vorgesehen sein.

Die Gehäusebohrung 1 umfasst mindestens einen Ventilausgang 5. Der mindestens eine Ventilausgang 5 ist als Öffnung einer Gehäusewand 25 der Gehäusebohrung 1 vorgesehen und mit der Rücklaufleitung 10 verbunden. Die Öffnung kann beispielsweise in Form einer, vorzugsweise radial, in die Gehäusebohrung 1 mündenden Bohrung, der Gehäusewand 25 vorgesehen sein. Alternativ kann die Öffnung auch als Ringeinstich in der Gehäusewand 25 der Gehäusebohrung 1 vorgesehen sein. Der Ringeinstich ist vorteilhaft äquidistant zur Ebene des Ventileingangs 3 in einer Radialebene der Gehäusebohrung 1 angeordnet.

In einem weiteren Ausführungsbeispiel sind mehrere Ventilausgänge 5 vorgesehen, die insbesondere in einer Radialebene und/oder in gleichem Winkelabstand zueinander angeordnet sind.

Mindestens einer der Ventilausgänge 5 kann dabei in der beschriebenen Form als Bohrung ausgebildet sein. Zusätzlich oder alternativ kann mindestens einer der Ventilausgänge 5 in der beschriebenen Form als Ringeinstich ausgebildet sein.

Der durch die Drosselöffnung 4 geschaffene freie Strömungsquerschnitt wird vorteilhafterweise kleiner als der freie Strömungsquerschnitt des mindestens einen Ventilausgangs 5 gewählt.

Als vorteilhaft hat sich erwiesen, dass der freie Strömungsquerschnitt der Drosselöffnung 4 0,15mm² bis 0,5mm² beträgt. Weiterhin hat sich als vorteilhaft erwiesen, dass der über den mindestens einen Ventilausgang 5 geschaffene freie Strömungsquerschnitt 3mm² bis 50mm² beträgt.

Im Betrieb wird der Ventilkolben 2 durch den im Triebwerksraum 9 herrschenden Zulaufdruck des Kraftstoffs entgegen der Federkraft der Feder 7 gedrückt und in die Gehäusebohrung 1 hineingeschoben. Je größer der Zulaufdruck, umso weiter wird der Ventilkolben 2 in die Gehäusebohrung 1 gegen die Feder 7 geschoben.

Dabei ist der Ventilkolben 2 aufgrund seiner Eigenschaft als Hohlzyhlinder mit Kraftstoff gefüllt.

Sobald die Drosselöffnung 4 in den Bereich des mindestens einen Ventilausgangs 5 gelangt, gibt sie einen Durchfluss aus dem Innenraum 30 des Ventilkolbens 2 zum mindestens einen Ventilausgang 5 frei. Dadurch kann Kraftstoff vom Ventileingang 3 über die Drosselöffnung 4 und den mindestens einen Ventilausgang 5 in die Rücklaufleitung 10 abfließen.

Solange sich der Ventilkolben 2 in einer Position innerhalb der Gehäusebohrung 1 befindet, in der die Drosselöffnung 4 mit dem mindestens einen Ventilausgang 5 korrespondiert, um einen Durchfluss von Kraftstoff vom Ventileingang 3 zum mindestens einen Ventilausgang 5 zu bewirken, befindet sich der Ventilkolben 2 in einem ersten Bereich seiner Position in der Gehäusebohrung 1. In diesem ersten Bereich der Position des Ventilkolbens 2 arbeitet das Überströmventil 11 in einer ersten Stufe.

In der ersten Stufe wird die Durchflussmenge zwischen dem Ventileingang 3 und dem mindestens einen Ventilausgang 5 durch den im Vergleich zum mindestens einen Ventilausgang 5 geringeren freien Strömungsquerschnitt der Drosselöffnung 4 bestimmt. Dadurch lässt sich zum einen eine Mengenbegrenzung und zum zweiten ein Druckregelbereich realisieren.

Der erste Bereich der Position des Ventilkolbens 2 in der Gehäusebohrung 1 wird definiert durch die Aufweitung der Querschnittsfläche der Drosselöffnung 4 an ihrem gehäusebohrungsseitigen Ende. Je größer die Aufweitung, desto größer der erste Bereich. Da die Einstellung der Position des Ventilkolbens 2 mit dem Zulaufdruck korrespondiert, ist dem ersten Bereich der Position des Ventilkolbens 2 ein entsprechender Druckbereich des Zulaufdrucks oder Öffnungsdrucks des Überströmventils 11 zugeordnet.

Dabei liegt gemäß einem vorteilhaften Ausführungsbeispiel der erste Bereich der Position des Ventilkolbens 2 in der Gehäusebohrung 1 bei Verwendung einer entsprechend eingestellten Feder 7 bei einem Öffnungsdruck des Überströmventils 11 in einem vorgegebenen Druckbereich, vorzugsweise zwischen 1,0 bar und 4,0 bar, vor.

Figur 2 zeigt das Überströmventil 11 in seiner ersten Stufe im ersten Betriebszustand, in dem die Drosselöffnung 4 den Durchfluss durch den mindestens einen Ventilausgang 5 gerade freigegeben hat.

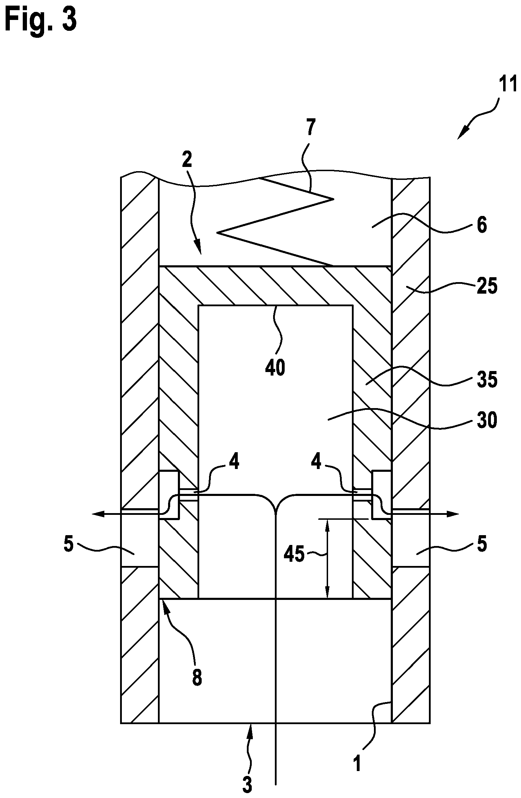

Figur 3, in der gleiche Bezugszeichen gleiche Elemente kennzeichnen wie in Figur 2, zeigt das Überströmventil 11 in seiner ersten Stufe in einem zweiten Betriebszustand, in dem die Drosselöffnung 4 den Durchfluss durch den mindestens einen Ventilausgang 5 gerade noch freigibt, kurz bevor es bei weiterer Erhöhung des Öffnungsdruckes die Drosselöffnung 4 wieder verschließt.

In beiden Figuren 2 und 3 ist der Kraftstofffluss vom Ventileingang 3 zum mindestens einen Ventilausgang 5 durch Pfeile eingetragen.

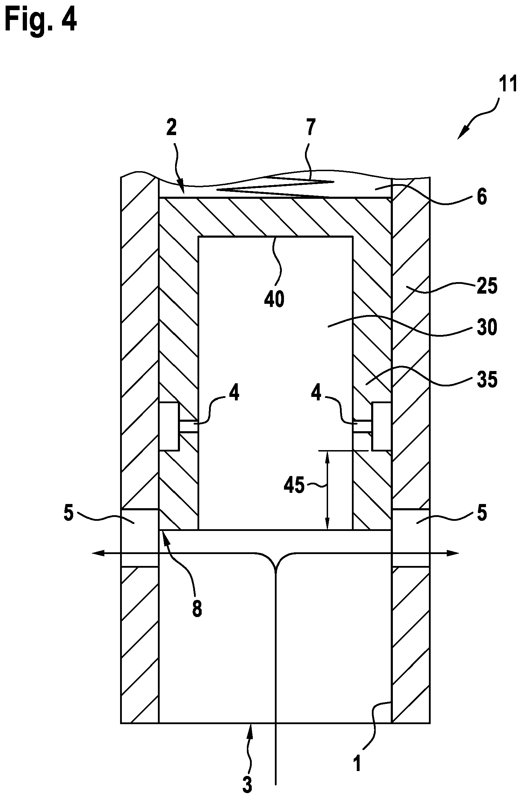

In Figur 4 ist das Überströmventil 11 in einem dritten Betriebszustand dargestellt. In Figur 4 kennzeichnen gleiche Bezugszeichen gleiche Elemente wie in Figur 3. Gemäß dem dritten Betriebszustand wurde der Öffnungsdruck des Überströmventils 11 gegenüber dem zweiten Betriebszustand weiter auf über 4,0 bar, vorzugsweise mindestens 4,5bar, erhöht. Dadurch wurde die Drosselöffnung 4 verschlossen und der Ventilkolben 2 soweit in die Gehäusebohrung 1 gegen die Kraft der Feder 7 hineingeschoben, bis eine ringförmige Steuerkante 8 des Ventilkolbens 2 eine den mindestens einen Ventilausgang 5 zum Ventileingang 3 hin begrenzende Kante überfahren hat. Voraussetzung dafür ist, dass der Abstand 45 der Drosselöffnung 4 an der dem Innenraum 30 abgewandten Seite des Ventilkolbens 2 in axialer Richtung des Überströmventils 11 zum ventileingangsseitigen Ende des Ventilkolbens 2 mindestens so groß gewählt ist, dass er dem Durchmesser des mindestens einen Ventilausgangs 5 der Gehäusewand 25 in axialer Richtung entspricht. Somit wird gewährleistet, dass der mindestens eine Ventilausgang 5 erst dann vom Ventilkolben 2 freigegeben werden kann, wenn die Drosselöffnung 4 bereits verschlossen ist. Um dies sicherzustellen, sollte der genannte Abstand 45 größer als der Durchmesser des mindestens einen Ventilausgangs 5 der Gehäusewand 25 in axialer Richtung gewählt werden, wie in den Figuren 2, 3 und 4 dargestellt.

Auf diese Weise wird sichergestellt, dass ein Durchfluss durch die Drosselöffnung 4 gesperrt ist wenn der Ventilkolben 2 den mindestens einen Ventilausgang 5 an seinem dem Federraum 6 abgewandten Ende freigibt. Der Betrag der Fördermenge durch eine Vorförderpumpe 70 kann so reduziert werden.

Wenn der Ventilkolben 2 wie in Figur 4 dargestellt den mindestens einen Ventilausgang 5 zumindest teilweise freigibt und damit einen Durchfluss von Kraftstoff vom Ventileingang 3 direkt durch den mindestens einen Ventilausgang 5 ermöglicht, dann arbeitet das Überströmventil 11 in einer zweiten Stufe und der Ventilkolben nimmt einen zweiten Bereich seiner Position in der Gehäusebohrung 1 ein. Dabei ist diesem zweiten Bereich der Position des Ventilkolbens 2 ein Öffnungsdruck des Überströmventils 11 in einem vorgegebenen Druckbereich abhängig von der Federcharakteristik der verwendeten Feder 7 und dem gewählten Abstand 45 zugeordnet. Im vorliegenden Ausführungsbeispiel ist es ein Öffnungsdruck größer oder gleich 4,0bar, vorzugsweise größer oder gleich 4,5 bar.

In Figur 4 ist wieder der Kraftstofffluss vom Ventileingang 3 zum mindestens einen Ventilausgang 5 durch Pfeile dargestellt.

In der zweiten Stufe kann das Überströmventil zur Mengenregelung eingesetzt werden.

Da der freie Strömungsquerschnitt des mindestens einen Ventilausgangs 5 erheblich größer gewählt ist, als der freie Strömungsquerschnitt der Drosselöffnung 4, ergibt sich in der zweiten Stufe eine erheblich größere Durchflussmenge vom Ventileingang 3 zum mindestens einen Ventilausgang 5 als in der ersten Stufe.

Das vorgeschlagene Überströmventil 11 öffnet demnach in zwei Stufen, wobei in den beiden Stufen der freie Strömungsquerschnitt des Überströmventils 11 wie beschrieben variiert. Dies hat zur Folge, dass auch der Durchfluss in den verschiedenen Stufen variiert. Der Durchfluss kann auf diese Weise an bestimmte Betriebsparameter der Hochdruckpumpe 105, wie Kraftstoffdruck, Motordrehzahl, Kraftstofftemperatur, usw. angepasst werden. Bei steigender Kraftstofftemperatur kann die über das Überströmventil 11 abgeführte, vorzugsweise der Rücklaufleitung 10 zugeführte Kraftstoffmenge erhöht werden, um beispielsweise eine verbesserte Wärmeabfuhr zu bewirken.

Der Durchfluss des Überströmventils 11 kann in der ersten Stufe - bei einem Druck von beispielsweise knapp unter 4,0 bar 30 I/h betragen. Wird das Überströmventil 11 weiter geöffnet, gibt der Ventilkolben 2 nach Verschließen der Drosselöffnung 4 den mindestens einen Ventilausgang 5 über seine Steuerkante 8 zumindest teilweise frei, so dass die zweite Stufe eingestellt wird. Durch die so bewirkte direkte Verbindung des mindestens einen Ventilausgangs 5 mit dem Ventileingang 3 kann aufgrund des größeren einstellbaren freien Strömungsquerschnitts des mindestens einen Ventilausgangs 5 der Durchfluss deutlich erhöht werden. Beispielsweise kann der Gesamtdurchfluss in der zweiten Stufe - bei einem Druck von 5,0 bar - 200 I/h betragen.

Über die Federkraft der Feder 7, die in dem Federraum 6 aufgenommen ist, ist der Öffnungsdruck des Überströmventils 11 einstellbar. Der Öffnungsdruck in der ersten Stufe kann beispielsweise 2,5 bar und in der zweiten Stufe beispielsweise 4,5 bar betragen.

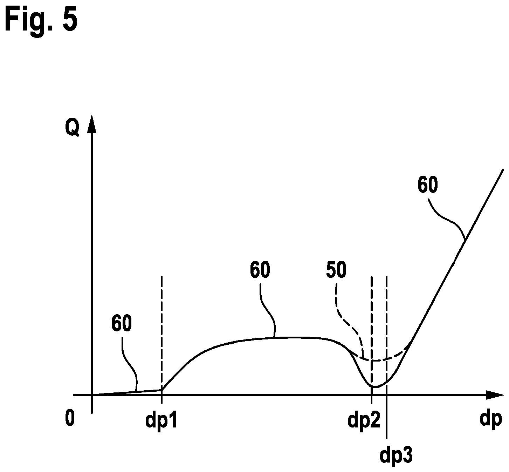

In der Figur 5 ist eine mögliche Kennlinie 60 des erfindungsgemäßen Überströmventils 11 dargestellt. Die Kennlinie 60 zeigt den Durchfluss Q durch das Überströmventil 11 vom Ventileingang 3 zum mindestens einen Ventilausgang 5 in Abhängigkeit vom Öffnungsdruck dp. In einem ersten Abschnitt bis zu einem ersten Öffnungsdruck dp1 von beispielsweise 1,0bar weist die Kennlinie 60 einen sehr flachen Verlauf auf. In diesem Abschnitt ist das Überströmventil 11 geschlossen und lediglich eine geringe Leckagemenge vermag am Ventilkolben 2 vorbei in die Rücklaufleitung 10 abzuströmen.

Mit Übersteigen des Öffnungsdrucks der ersten Stufe, nämlich des ersten Öffnungsdruckes dp1, steigt der Durchfluss Q erstmalig deutlich an. Jetzt befindet sich der Ventilkolben 2 im ersten Bereich seiner Position in der Gehäusebohrung 1. Der Verlauf der Kennlinie 60 hängt in der ersten Stufe von der konkreten Ausgestaltung der ersten Stufe, insbesondere von der Öffnungsanzahl und/oder dem freien Strömungsquerschnitt der Drosselöffnung 4 ab. Aufgrund des im Vergleich zum freien Strömungsquerschnitt des mindestens einen Ventilausgangs 5 erheblich kleineren freien Strömungsquerschnitts der Drosselöffnung 4 ist der Durchfluss in der ersten Stufe im Vergleich zur zweiten Stufe deutlich begrenzt. Aufgrund des erfindungsgemäßen Schließens der Drosselöffnung 4 vor Erreichen des Öffnungsdruckes für die zweite Stufe geht der Durchfluss Q mit Erreichen eines zweiten Öffnungsdruckes dp2 von beispielsweise 4,0 bar, zu dem die Drosselöffnung 4 wieder verschlossen wird, bis auf einen kleinen Leckagedurchfluss zurück. Ferner kann der Durchfluss von Kraftstoff vom Ventileingang 3 zum mindestens einen Ventilausgang 5 in der ersten Stufe abhängig vom Grad der Aufweitung der Querschnittsfläche der Drosselöffnung 4 an ihrem gehäusebohrungsseitigen Ende über einen gewünschten Bereich des Öffnungsdruckes weitgehend konstant gehalten werden, wie ebenfalls aus dem Verlauf der Kennlinie 60 zwischen den beiden Öffnungsdrücken dp1 und dp2 in Figur 5 hervorgeht.

Eine signifikante Erhöhung des Durchflusses Q wird jedoch erst mit Überschreiten des Öffnungsdrucks der zweiten Stufe, nämlich eines dritten Öffnungsdruckes dp3 von beispielsweise 4,5bar erreicht. In diesem Abschnitt steigt die Kennlinie 60 steil an. Dies ist darauf zurückzuführen, dass der einstellbare freie Strömungsquerschnitt des mindestens einen Ventilausgangs 5 deutlich größer ist als der freie Strömungsquerschnitt der Drosselöffnung 4. Mit vollständiger Freigabe des mindestens einen Ventilausgangs 5 durch die Steuerkante 8 des Ventilkolbens 2 wird der freie Strömungsquerschnitt des mindestens einen Ventilausgangs 5 vollständig für den Kraftstoffdurchfluss zur Verfügung gestellt, der wie beschrieben beispielhaft zwischen 3mm² und 50mm² je nach Ausgestaltung des mindestens einen Ventilausgangs 5 gewählt ist.

In einer alternativen nicht dargestellten Ausführungsform kann es auch vorgeshehen sein, dass der Abstand 45 der Drosselöffnung 4 an der dem Innenraum 30 abgewandten Seite des Ventilkolbens 2 in axialer Richtung des Überströmventils 11 zum ventileingangsseitigen Ende des Ventilkolbens 2 kleiner gewählt ist als der Durchmesser des mindestens einen Ventilausgangs 5 der Gehäusewand 25 in axialer Richtung. In diesem Fall wird ein Durchfließen der Drosselöffnung 4 mit Kraftstoff über den mindestens einen Ventilausgang 5 zur Rücklaufleitung 10 während der zumindest teilweisen Freigabe des mindestens einen Ventilausgangs 5 durch den Ventilkolben 2 nicht verhindert, so dass sich die erste Stufe und die zweite Stufe zumindest in einem Bereich des Öffnungsdruckes überlagern. Auf diese Weise kann der Rückgang des Durchflusses Q beim Übergang von der ersten Stufe zur zweiten Stufe gemäß der Kennlinie 60 nach Figur 5 zumindest teilweise vermieden werden, was in Figur 5 gestrichelt und mit dem Bezugszeichen 50 angedeutet ist. Der Abstand 45 kann somit im Zusammenspiel mit der verwendeten Feder 7 und den damit verbundenen Öffnungsdrücken zum Erreichen der jeweiligen Stufe des Überströmventils 11 je nach gewünschtem Kennlinienverlauf entsprechend eingestellt werden.

Das zweistufig arbeitende Überströmventil 11 ermöglicht beim Betrieb der Hochdruckpumpe 105 eine kombinierte Druck-/Mengenregelung. Bei Einsatz der Hochdruckpumpe 105 in einem Common-Rail-Einspritzsystem wird in der ersten Stufe bei geringen Belastungen der mit der Hochdruckpumpe 105 mit Kraftstoff versorgten Brennkraftmaschine eine Druckregelung durchgeführt. Betriebspunkte der Brennkraftmaschine für deren Belastung können abhängig von der Motordrehzahl n, der Kraftstofftemperatur T im Triebwerksraum 9 oder im Hochdruckspeicher oder in der Rücklaufleitung 10 und dem Kraftstoffdruck p im Hochdruckspeicher mit Hilfe geeigneter und dem Fachmann bekannter Sensorik identifiziert werden, die schematisch in Figur 1 in Form eines Drehzahlsensors 85, eines Temperatursensors 90 und eines Drucksensors 95 dargestellt ist.

Bei geringen Belastungen der Brennkraftmaschine, gekennzeichnet durch niedrige Motordrehzahl n, niedrige Kraftstofftemperatur T und/oder geringen Kraftstoffdruck p reicht in der Regel ein mäßiger und konstanter Kraftstoffkühlstrom im Triebwerksraum 9 aus, um die Pumpe zu kühlen. Dazu kann das Überströmventil 11 in der ersten Stufe betrieben werden.

Bei hohen Belastungen der Brennkraftmaschine, also bei hoher Motordrehzahl n, hohem Kraftstoffdruck p und/oder hoher Kraftstofftemperatur T eignet sich die Mengenregelung in der zweiten Stufe des Überströmventils 11, die einen maximalen Kraftstoffkühlstrom ermöglicht.

Auf diese Weise wird eine Vollauslastung der Vorförderpumpe 70 in der ersten Stufe des Überströmventils 11 vermieden und damit eine günstigere CO2-Bilanz erreicht.

Zum Betrieb des Überströmventils 11 in der ersten Stufe oder in der zweiten Stufe wird die Vorförderpumpe 70 entsprechend wie in Figur 1 dargestellt mittels einer Steuerung 80 angesteuert, um den für den Betrieb in der ersten Stufe oder in der zweiten Stufe erforderlichen Zulauf- bzw. Öffnungsdruck des Überströmventils 11 bereit zu stellen. Dazu sind der Steuerung 80 die Signale des Drehzahlsensors 85, des Temperatursensors 90 und des Drucksensors 95 wie in Figur 1 dargestellt zugeführt. Der Drehzahlsensor 85 misst in dem Fachmann bekannter Weise die Motordrehzahl n der Brennkraftmaschine. Der Temperatursensor 90 ist im Triebwerksraum 9, im Hochdruckspeicher 110 oder in der Rücklaufleitung 10 angeordnet und misst die dortige Kraftstofftemperatur T. Der Drucksensor 95 ist im oder an dem Hochdruckspeicher 110 angeordnet und misst den Kraftstoffdruck p im Hochdruckspeicher 110. Der Einfachheit und Übersichtlichkeit halber sind die Sensoren 85, 90, 95 in Figur 1 nicht an ihrem tatsächlichen Ort sondern lediglich als vorhandene Signalgeber der Steuerung 80 schematisch dargestellt.

So kann die Vorförderpumpe 70 beispielsweise derart angesteuert werden, dass sie den für den Betrieb des Überströmventils 11 in der ersten Stufe erforderlichen Zulaufdruck bei Kraftstofftemperaturen T unterhalb eines vorgegebenen Temperaturgrenzwertes und den für den Betrieb in der zweiten Stufe erforderlichen Zulaufdruck bei Kraftstofftemperaturen T größer oder gleich dem vorgegebenen Temperaturgrenzwert einstellt. Der Temperaturgrenzwert kann je nach Anwendung geeignet appliziert und bspw. im Bereich zwischen 60°C und 75°C, vorteilhaft zwischen 65°C und 70°C, gewählt werden.

Zusätzlich oder alternativ kann die Vorförderpumpe 70 beispielsweise derart angesteuert werden, dass sie den für den Betrieb des Überströmventils 11 in der ersten Stufe erforderlichen Zulaufdruck bei Motordrehzahlen n unterhalb eines vorgegebenen Motordrehzahlgrenzwertes und den für den Betrieb in der zweiten Stufe erforderlichen Zulaufdruck bei Motordrehzahlen n größer oder gleich dem vorgegebenen Motordrehzahlgrenzwert einstellt. Der Motordrehzahlgrenzwert kann je nach Anwendung geeignet appliziert und bspw. im Bereich zwischen 1500rpm und 3500rpm, vorteilhaft zwischen 2500rpm und 3000rpm, gewählt werden.

Zusätzlich oder alternativ kann die Vorförderpumpe 70 beispielsweise derart angesteuert werden, dass sie den für den Betrieb des Überströmventils 11 in der ersten Stufe erforderlichen Zulaufdruck bei Kraftstoffdrücken p unterhalb eines vorgegebenen Druckgrenzwertes und den für den Betrieb in der zweiten Stufe erforderlichen Zulaufdruck bei Kraftstoffdrücken p größer oder gleich dem vorgegebenen Druckgrenzwert einstellt. Der Druckgrenzwert kann je nach Anwendung geeignet appliziert und bspw. im Bereich zwischen 1400bar und 1800bar, vorteilhaft zwischen 1500bar und 1700bar, gewählt werden.

Als eine Applikation, die einerseits sicherstellt, dass sich der erforderliche Kraftstoffkühlstrom im Triebwerksraum 9 einstellt und andererseits einen möglichst großen Betriebsbereich der Vorförderpumpe 70 mit reduzierter Förderleistung, d.h. Betrieb des Überströmventils 11 in seiner erste Stufe gewährleistet, hat sich folgendes ergeben:
Einstellung eines Zulaufdrucks durch die Vorförderpumpe 70 zum Betrieb des Überströmventils 11 in der ersten Stufe für eine Motordrehzahl n unterhalb des vorgegebenen Motordrehzahlgrenzwertes, eine Kraftstofftemperatur T unterhalb des vorgegebenen Temperaturgrenzwertes oder einen Kraftstoffdruck p unterhalb des vorgegebenen Druckgrenzwertes und andernfalls Einstellung eines Zulaufdruckes durch die Vorförderpumpe 70 zum Betrieb des Überströmventils 11 in der zweiten Stufe.

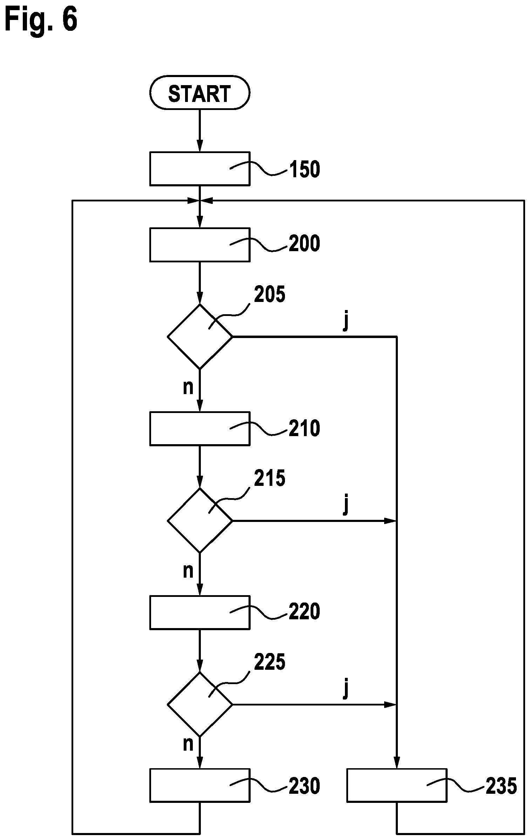

In Figur 6 ist anhand eines Ablaufplans ein erstes Beispiel eines Betriebs des zweistufigen Überströmventils 11 mittels der Steuerung 80 über die Vorförderpumpe 70 dargestellt, der diese Applikation veranschaulicht.

Nach dem Start des Programms wird die Vorförderpumpe 70 bei einem Programmpunkt 150 von der Steuerung 80 derart angesteuert, dass sie einen Zulaufdruck zum Betrieb des Überströmventils 11 in der zweiten Stufe liefert. Somit ist sichergestellt, dass zu Beginn des Programmlaufs ein ausreichender Kraftstoffkühlstrom vorliegt. Anschließend wird zu einem Programmpunkt 200 verzweigt.

Bei Programmpunkt 200 wird die Motordrehzahl n mittels des Drehzahlsensors 85 erfasst. Anschließend wird zu einem Programmpunkt 205 verzweigt.

Bei Programmpunkt 205 prüft die Steuerung 80, ob die erfasste Motordrehzahl n kleiner als der vorgegebene Motordrehzahlgrenzwert ist. Ist dies der Fall, wird zu einem Programmpunkt 235 verzweigt. Andernfalls wird zu einem Programmpunkt 210 verzweigt.

Bei Programmpunkt 210 wird die Kraftstofftemperatur T mittels des Temperatursensors 90 erfasst. Anschließend wird zu einem Programmpunkt 215 verzweigt.

Bei Programmpunkt 215 prüft die Steuerung 80, ob die erfasste Kraftstofftemperatur T kleiner als der vorgegebene Temperaturgrenzwert ist. Ist dies der Fall, wird zu Programmpunkt 235 verzweigt. Andernfalls wird zu einem Programmpunkt 220 verzweigt.

Bei Programmpunkt 220 wird der Kraftstoffdruck p mittels des Drucksensors 95 erfasst. Anschließend wird zu einem Programmpunkt 225 verzweigt.

Bei Programmpunkt 225 prüft die Steuerung 80, ob der erfasste Kraftstoffdruck p kleiner als der vorgegebene Druckgrenzwert ist. Ist dies der Fall, wird zu Programmpunkt 235 verzweigt. Andernfalls wird zu einem Programmpunkt 230 verzweigt.

Bei Programmpunkt 230 wird die Vorförderpumpe 70 von der Steuerung 80 derart angesteuert, dass sie einen Zulaufdruck zum Betrieb des Überströmventils 11 in der zweiten Stufe liefert. Anschließend wird zu Programmpunkt 200 zurückverzweigt.

Bei Programmpunkt 235 wird die Vorförderpumpe 70 von der Steuerung 80 derart angesteuert, dass sie einen Zulaufdruck zum Betrieb des Überströmventils 11 in der ersten Stufe liefert. Anschließend wird zu Programmpunkt 200 zurückverzweigt.

Das Programm wird spätestens mit Abschalten der Brennkraftmaschine beendet.

Als eine Applikation, die immer einen ausreichenden Kraftstoffkühlstrom im Triebwerksraum 9 sicherstellt und nur dann die Förderleistung der Vorförderpumpe 70 zum Betrieb des Überströmventils 11 in seiner ersten Stufe reduziert, wenn keiner der erfassten Betriebsparameter Motordrehzahl n, Kraftstofftemperatur T und Kraftstoffdruck p den jeweils zugeordneten vorgegebenen Grenzwert erreicht oder überschreitet, hat sich folgendes ergeben:
Einstellung eines Zulaufdrucks durch die Vorförderpumpe 70 zum Betrieb des Überströmventils 11 in der ersten Stufe für eine Motordrehzahl n unterhalb des vorgegebenen Motordrehzahlgrenzwertes, eine Kraftstofftemperatur T unterhalb des vorgegebenen Temperaturgrenzwertes und einen Kraftstoffdruck p unterhalb des vorgegebenen Druckgrenzwertes und andernfalls Einstellung eines Zulaufdruckes durch die Vorförderpumpe 70 zum Betrieb des Überströmventils 11 in der zweiten Stufe.

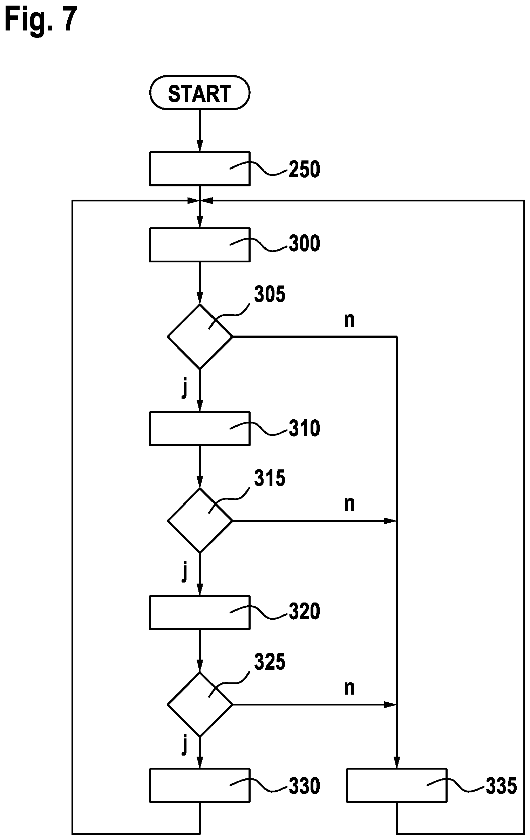

In Figur 7 ist anhand eines Ablaufplans ein zweites Beispiel eines Betriebs des zweistufigen Überströmventils 11 mittels der Steuerung 80 über die Vorförderpumpe 70 dargestellt, der diese Applikation veranschaulicht.

Nach dem Start des Programms wird die Vorförderpumpe 70 bei einem Programmpunkt 250 von der Steuerung 80 derart angesteuert, dass sie einen Zulaufdruck zum Betrieb des Überströmventils 11 in der zweiten Stufe liefert. Somit ist sichergestellt, dass zu Beginn des Programmlaufs ein ausreichender Kraftstoffkühlstrom vorliegt. Anschließend wird zu einem Programmpunkt 300 verzweigt

Bei Programmpunkt 300 wird die Motordrehzahl n mittels des Drehzahlsensors 85 erfasst. Anschließend wird zu einem Programmpunkt 305 verzweigt.

Bei Programmpunkt 305 prüft die Steuerung 80, ob die erfasste Motordrehzahl n kleiner als der vorgegebene Motordrehzahlgrenzwert ist. Ist dies der Fall, wird zu einem Programmpunkt 310 verzweigt, andernfalls wird zu einem Programmpunkt 335 verzweigt.

Bei Programmpunkt 310 wird die Kraftstofftemperatur T mittels des Temperatursensors 90 erfasst. Anschließend wird zu einem Programmpunkt 315 verzweigt.

Bei Programmpunkt 315 prüft die Steuerung 80, ob die erfasste Kraftstofftemperatur T kleiner als der vorgegebene Temperaturgrenzwert ist. Ist dies der Fall, wird zu Programmpunkt 320 verzweigt. Andernfalls wird zu einem Programmpunkt 335 verzweigt.

Bei Programmpunkt 320 wird der Kraftstoffdruck p mittels des Drucksensors 95 erfasst. Anschließend wird zu einem Programmpunkt 325 verzweigt.

Bei Programmpunkt 325 prüft die Steuerung 80, ob der erfasste Kraftstoffdruck p kleiner als der vorgegebene Druckgrenzwert ist. Ist dies der Fall, wird zu Programmpunkt 330 verzweigt. Andernfalls wird zu einem Programmpunkt 335 verzweigt.

Bei Programmpunkt 335 wird die Vorförderpumpe 70 von der Steuerung 80 derart angesteuert, dass sie einen Zulaufdruck zum Betrieb des Überströmventils 11 in der zweiten Stufe liefert. Anschließend wird zu Programmpunkt 300 zurückverzweigt.

Bei Programmpunkt 330 wird die Vorförderpumpe 70 von der Steuerung 80 derart angesteuert, dass sie einen Zulaufdruck zum Betrieb des Überströmventils 11 in der ersten Stufe liefert. Anschließend wird zu Programmpunkt 300 zurückverzweigt.

Das Programm wird spätestens mit Abschalten der Brennkraftmaschine beendet.

In weiteren Beispielen kann es auch vorgesehen sein, das Überströmventil 11 nur dann in seiner ersten Stufe zu betreiben, wenn nur zwei der drei Betriebsparameter Motordrehzahl n, Kraftstofftemperatur T und Kraftstoffdruck p ihren zugeordneten vorgegebenen Grenzwert unterschreiten.

Ferner kann es alternativ vorgesehen sein, überhaupt nur einen oder nur zwei der Betriebsparameter Motordrehzahl n, Kraftstofftemperatur T und Kraftstoffdruck p für die Entscheidung auszuwählen, ob das Überströmventil 11 in der ersten oder in der zweiten Stufe betrieben wird. So kann beispielsweise die Motordrehzahl n oder die Kraftstofftemperatur T oder der Kraftstoffdruck p bei dieser Entscheidung unberücksichtigt bleiben, so dass auch der entsprechende Sensor dafür eingespart werden könnte. Ferner könnte die Entscheidung auch nur anhand der Motordrehzahl n oder nur anhand der Kraftstofftemperatur T oder nur des Kraftstoffdruckes p getroffen werden.

## Patentansprüche

1. Verfahren zum Betrieb eines Überströmventils (11), in mindestens zwei Stufen mit unterschiedlichem Durchfluss Q, wobei das Überströmventil (11) in einer Hochdruckpumpe (105) eines Kraftstoffeinspritzsystems einer Brennkraftmaschine angeordnet ist, umfassend ein in einer Gehäusebohrung (1) verschiebbar aufgenommenes Ventilelement (2) zur Verbindung eines Ventileingangs (3) mit wenigstens einem Ventilausgang (5) sowie eine in einem Federraum (6) aufgenommene Feder (7), deren Federkraft das Ventilelement (2) in Richtung des Ventileingangs (3) beaufschlagt, wobei der mindestens eine Ventilausgang (5) als Öffnung, insbesondere in Form einer, vorzugsweise radial, in die Gehäusebohrung (1) mündenden Bohrung, einer Gehäusewand (25) vorgesehen ist, dass das Ventilelement (2) einen zum Ventileingang (3) hin geöffneten Innenraum (30) umfasst und dass das Ventilelement (2) eine Drosselöffnung (4) in einer Umwandung (35) des Innenraums (30) umfasst, die in einem ersten Bereich der Position des Ventilelements (2) in der Gehäusebohrung (1) einen Durchfluss aus dem Innenraum (30) des Ventilelementes (2) zum mindestens einen Ventilausgang (5) in der Gehäusewand (25) freigibt, wobei der durch die Drosselöffnung (4) geschaffene freie Strömungsquerschnitt kleiner als der freie Strömungsquerschnitt des mindestens einen Ventilausgangs (5) ist, und ein Zulaufdruck des Überströmventils (11) durch eine Vorförderpumpe (70) eingestellt wird und wobei abhängig vom Zulaufdruck das Überströmventil (11) in einer ersten Stufe mit geringerem Durchfluss Q oder in einer zweiten Stufe mit höherem Durchfluss Q betrieben wird, wobei der Zulaufdruck abhängig von einer Motordrehzahl (n) der Brennkraftmaschine, einem Kraftstoffdruck (p) in einem von der Hochdruckpumpe (105) mit Kraftstoff versorgten Hochdruckspeicher und/oder einer Kraftstofftemperatur (T), insbesondere im Hochdruckspeicher, in einem Triebwerksraum (9) der Hochdruckpumpe (105) oder in einer Rücklaufleitung (10) der Hochdruckpumpe (105), eingestellt wird, wobei in der ersten Stufe der Durchfluss Q über einen gewünschten Bereich des Zulaufdrucks weitgehend konstant gehalten wird, und wobei in der zweiten Stufe der Durchfluss Q mit zunehmendem Zulaufdruck steil ansteigt, wobei der Zulaufdruck zum Betrieb des Überströmventils (11) in der ersten Stufe für eine Motordrehzahl (n) unterhalb eines vorgegebenen Motordrehzahlgrenzwertes, eine Kraftstofftemperatur (T) unterhalb eines vorgegebenen Temperaturgrenzwertes und/oder eines Kraftstoffdruckes (p) unterhalb eines vorgegebenen Druckgrenzwertes eingestellt wird und dass andernfalls ein Zulaufdruck zum Betrieb des Überströmventils (11) in der zweiten Stufe eingestellt wird.

2. Verfahren nach Anspruch 1, **dadurch gekennzeichnet, dass** der Motordrehzahlgrenzwert in einem Bereich von 1500rpm bis 3500rpm, vorzugsweise in einem Bereich von 2500rpm bis 3000rpm gewählt wird.

3. Verfahren nach Anspruch 1 oder 2, **dadurch gekennzeichnet, dass** der Temperaturgrenzwert in einem Bereich von 60°C bis 75°C, vorzugsweise in einem Bereich von 65°C bis 70°C gewählt wird.

4. Verfahren nach einem der Ansprüche 1 bis 3, **dadurch gekennzeichnet, dass** der Druckgrenzwert in einem Bereich von 1400bar bis 1800bar, vorzugsweise in einem Bereich von 1500bar bis 1700bar gewählt wird.

## Claims

1. Method for operating an overflow valve (11) in at least two stages with different throughflow Q, wherein the overflow valve (11) is arranged in a high-pressure pump (105) of a fuel injection system of an internal combustion engine, comprising a valve element (2), which is received displaceably in a housing bore (1) and which serves for connecting a valve inlet (3) to at least one valve outlet (5), and comprising a spring (7) which is received in a spring chamber (6) and the spring force of which forces the valve element (2) in the direction of the valve inlet (3), wherein the at least one valve outlet (5) is provided as an opening, in particular in the form of a bore which opens preferably radially into the housing bore (1), of a housing wall (25), in that the valve element (2) comprises an interior space (30) which is open to the valve inlet (3), and in that the valve element (2) comprises a throttle opening (4) in a peripheral wall (35) of the interior space (30), which throttle opening, in a first range of the position of the valve element (2) in the housing bore (1), allows a throughflow from the interior space (30) of the valve element (2) to the at least one valve outlet (5) in the housing wall (25), wherein the free flow cross section created by the throttle opening (4) is smaller than the free flow cross section of the at least one valve outlet (5), and an inflow pressure of the overflow valve (11) is set by a predelivery pump (70), and wherein, in a manner dependent on the inflow pressure, the overflow valve (11) is operated in a first stage with relatively low throughflow Q or in a second stage with relatively high throughflow Q, wherein the inflow pressure is set in a manner dependent on an engine rotational speed (n) of the internal combustion engine, on a fuel pressure (p) in a high-pressure accumulator that is supplied with fuel by the high-pressure pump (105), and/or on a fuel temperature (T), in particular in the high-pressure accumulator, in a drive mechanism chamber (9) of the high-pressure pump (105) or in a return line (10) of the high-pressure pump (105), wherein, in the first stage, the throughflow Q is kept substantially constant over a desired range of the inflow pressure, and wherein, in the second stage, the throughflow Q increases steeply with increasing inflow pressure, wherein the inflow pressure for the operation of the overflow valve (11) in the first stage is set for an engine rotational speed (n) below a specified engine rotational speed threshold value, a fuel temperature (T) below a specified temperature threshold value and/or a fuel pressure (p) below a specified pressure threshold value, and in that, otherwise, an inflow pressure for the operation of the overflow valve (11) in the second stage is set.

2. Method according to Claim 1, **characterized in that** the engine rotational speed threshold value is selected in a range from 1500 rpm to 3500 rpm, preferably in a range from 2500 rpm to 3000 rpm.

3. Method according to Claim 1 or 2, **characterized in that** the temperature threshold value is selected in a range from 60°C to 75°C, preferably in a range from 65°C to 70°C.

4. Method according to any of Claims 1 to 3, **characterized in that** the pressure threshold value is selected in a range from 1400 bar to 1800 bar, preferably in a range from 1500 bar to 1700 bar.

## Revendications

1. Procédé de fonctionnement d'une soupape de décharge (11), en au moins deux étages avec des débits Q différents, la soupape de décharge (11) étant disposée dans une pompe à haute pression (105) d'un système d'injection de carburant d'un moteur à combustion interne, ladite soupape comprenant un élément de soupape (2) reçu de manière coulissante dans un alésage de boîtier (1) et destiné à relier une entrée de soupape (3) à au moins une sortie de soupape (5) ainsi qu'un ressort (7) qui est logé dans une chambre à ressort (6) et dont la force de ressort agit sur l'élément de soupape (2) en direction de l'entrée de soupape (3), l'au moins une sortie de soupape (5) étant prévue sous la forme d'une ouverture, en particulier sous la forme d'un alésage, débouchant, de préférence radialement, dans l'alésage de boîtier (1), d'une paroi de boîtier (25), en ce que l'élément de soupape (2) comprend un espace intérieur (30) qui est ouvert en direction de l'entrée de soupape (3) et en ce que l'élément de soupape (2) comprend une ouverture d'étranglement (4) qui est ménagée dans une paroi circonférentielle (35) de l'espace intérieur (30) et qui libère dans une première zone de la position de l'élément de soupape (2) dans l'alésage de boîtier (1) un écoulement allant de l'espace intérieur (30) de l'élément de soupape (2) vers au moins une sortie de soupape (5) dans la paroi de boîtier (25), la section transversale d'écoulement libre, créée par l'ouverture d'étranglement (4), étant inférieure à la section transversale d'écoulement libre d'au moins une sortie de soupape (5), et une pression d'admission de la soupape de décharge (11) étant réglée par un pompe de pré-alimentation (70) et la soupape de décharge (11) fonction dans un premier étage avec un débit Q faible ou dans un deuxième étage avec un débit Q élevé en fonction de la pression d'admission, la pression d'admission étant réglée en fonction d'une vitesse de rotation (n) du moteur à combustion interne, d'une pression de carburant (p) dans un réservoir à haute pression alimenté en carburant par la pompe à haute pression (105) et/ou d'une température de carburant (T), en particulier dans le réservoir à haute pression, dans un espace de turbine (9) de la pompe à haute pression (105) ou dans une conduite de retour (10) de la pompe à haute pression (105), le débit Q dans le premier étage étant maintenu dans une large mesure constante dans une plage souhaitée de la pression d'admission, et le débit Q dans la deuxième étape augmentant fortement à mesure que la pression d'admission augmente, la pression d'admission étant réglée pour une vitesse de rotation de moteur (n) inférieure à une valeur limite de vitesse de rotation de moteur spécifiée, une température de carburant (T) inférieure à une valeur limite de température spécifiée et/ou une pression de carburant (p) inférieure à une valeur limite de pression spécifiée afin de faire fonctionner la soupape de décharge (11) dans le premier étage et en ce que sinon une pression d'admission est réglée pour faire fonctionner la soupape de décharge (11) dans le deuxième étage.

2. Procédé selon la revendication 1, **caractérisé en ce que** la valeur limite de vitesse de rotation de moteur est choisie dans une plage allant de 1500 t/min à 3500 t/min, de préférence dans une plage allant de 2500 t/min à 3000 t/min.

3. Procédé selon la revendication 1 ou 2, **caractérisé en ce que** la valeur limite de température est choisie dans une plage allant de 60 °C à 75 °C, de préférence dans une plage allant de 65 °C à 70 °C.

4. Procédé selon l'une des revendications 1 à 3, **caractérisé en ce que** la valeur limite de pression est choisie dans une plage allant de 1400 bars à 1800 bars, de préférence dans une plage allant de 1500 bars à 1700 bars.
